# EUROPEAN PATENT APPLICATION

(11) **EP 1 469 478 A1**
(43) Date of publication of application: **20.10.2004**
(21) Application number: 04007971.7
(22) Date of filing: 01.04.2004
(51) Int. Cl.: G11B 27/28, G11B 27/034, G11B 27/038, G11B 27/34

(54) **Information processing apparatus for editing data**

(30) Priority: 14.04.2003 JP 2003109648
(71) Applicant: SONY CORPORATION, Tokyo (JP)
(72) Inventor: Ando, Akira, Shinagawa-ku Tokyo (JP); Shimoyoshi, Osamu, Shinagawa-ku Tokyo (JP); Morita, Toshihiro, Shinagawa-ku Tokyo (JP); Aida, Kiyoshi, Shinagawa-ku Tokyo (JP); Ono, Hideyuki, Shinagawa-ku Tokyo (JP); Hatanaka, Mitsuyuki, Shinagawa-ku Tokyo (JP); Onda, Tomohiro, Shinagawa-ku Tokyo (JP); Sakata, Junichiro, Shinagawa-ku Tokyo (JP)
(74) Representative: Körber, Martin, Dipl.-Phys.

(57) **Abstract**

To realize an information processing apparatus for editing data which enables editing of data intuitively with a simple operation. A track segment is displayed at a position corresponding to a track number on a first coordinate axis in a track segment display area, with a range corresponding to the period from the start time to the end time of the track on a second coordinate axis, so that it is possible to intuitively notify a user of the place in the order and the performance time of each track based on the position relationship among track segments and the length thereof. Furthermore, in response to an operation to move a track segment along the first coordinate axis, the track number of a track corresponding to the track segment is changed; the order of tracks is also changed; and in addition, the track segment is displayed as having moved to the position corresponding to the changed track number and the changed place in the order. Thereby, it is possible for the user to easily change the order of tracks with an intuitive operation.

## Description

### BACKGROUND OF THE INVENTION

### FIELD OF THE INVENTION

The present invention relates to an information processing apparatus for editing data and is preferably applicable to the case where data is divided onto multiple tracks using a personal computer, for example.

### DESCRIPTION OF THE RELATED ART

In some personal computers, analog voice signals to be recorded which are supplied from analog audio equipment are digitally converted via an external audio device or an internal sound card to generate voice data, and the generated voice data is recorded to an internal hard disk and the like (for example, see the non-patent document 1, http://www.Japan.steinberg.net/products/clean4/img/example.jpg)

On a personal computer with such a configuration, a user can perform an edit operation of dividing recorded voice data onto any number of tracks each of which corresponds to a tune, for example.

In this case, the personal computer displays the waveform of the recorded voice data on a predetermined record edit screen. While reproducing recorded voice data, the user specifies any position on the waveform of the voice data on the record edit screen with a mouse and the like to input a track separation point into the personal computer.

Furthermore, on the personal computer, various information such as the track number and the performance time of each track after separation is displayed on a track list on the record edit screen.

The record edit screen of the personal computer with such a configuration, however, has a problem that, an icon indicating a separation point is only attached to the waveform of voice data in response to input of a separation point, and it is impossible to intuitively display to the user the separation condition of the tracks, the time length of each track, the order relationship among the tracks and the like.

The record edit screen of the personal computer with such a configuration also has a problem that it is impossible to intuitively display to the user the association between each track on the waveform of voice data and the various information of each track displayed on a track list.

Furthermore, the record edit screen of the personal computer with such a configuration has a problem that it is impossible to perform an intuitive operation when changing the order of tracks.

### SUMMARY OF THE INVENTION

In view of the foregoing, an object of this invention is to provide an information processing apparatus for editing data which enables intuitive editing of data with a simple operation.

In order to solve the problems, in the present invention, there is provided an information processing apparatus for editing data for dividing data to be edited onto multiple tracks, characterized by comprising: display area displaying means for displaying a track segment display area consisting of an area for displaying track segments indicating the tracks, in which a first coordinate axis corresponds to the track numbers of the tracks and a second coordinate axis vertical to the first coordinate axis corresponds to the time axis of the data; and track segment displaying means for displaying a track segment corresponding to a track at a position corresponding to the track number of the track on the first coordinate axis in the track segment display area, with a range corresponding to the period from the start time to the end time of the track on the second coordinate axis.

Thereby, it is possible to intuitively notify a user of the place in the order and the performance time of each track through the position relationship among track segments and the length of the track segments.

Furthermore, in response to an operation to move the track segment along the first coordinate axis, the track segment displaying means changes the track number of the track corresponding to the track segment, changes the place of the track in the order, and in addition, displays the track segment as having moved to the position corresponding to the changed track number and the changed place in the order.

Thereby, it is possible for the user to easily change the order of tracks with an intuitive operation.

The nature, principle and utility of the invention will become more apparent from the following detailed description when read in conjunction with the accompanying drawings in which like parts are designated by like reference numerals or characters.

### BRIEF DESCRIPTION OF THE DRAWINGS

In the accompanying drawings:
Fig. 1 is a schematic diagram showing the entire configuration of a personal computer;

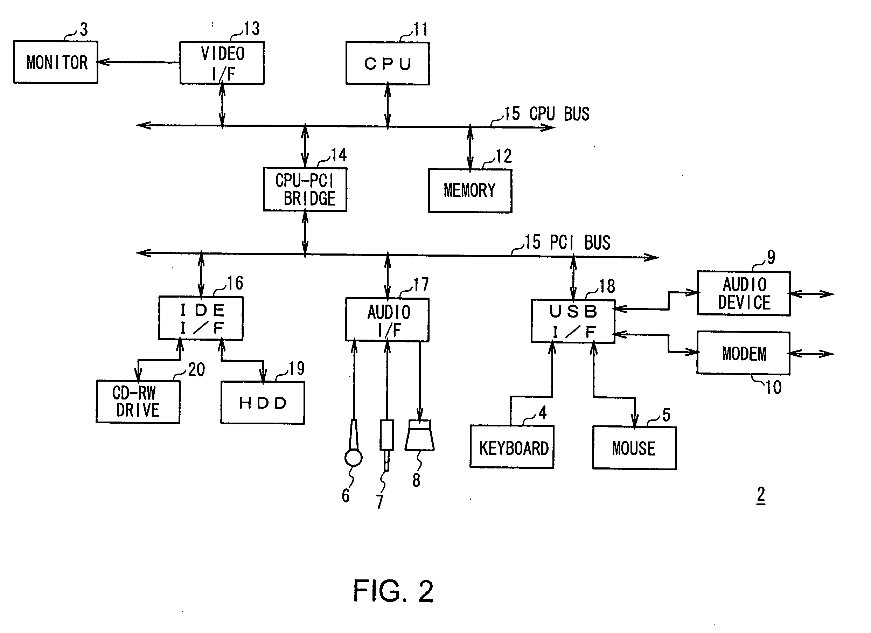

Fig. 2 is a block diagram showing the configuration of a PC body;
Fig. 3 is a block diagram showing the configuration of a record edit management program;
Fig. 4 shows a description example of a project file;
Fig. 5 is a table showing tags used for a project file;
Fig. 6 is a flowchart showing a record edit management procedure;
Fig. 7 is a schematic diagram showing an opening screen;
Fig. 8 is a schematic diagram showing an input selection screen;
Fig. 9 is a schematic diagram showing a record edit screen;
Fig. 10 is a schematic diagram showing the configuration of a track panel;
Figs. 11A to 11C are schematic diagrams showing how tracks are separated;
Fig. 12 is a schematic diagram showing the track panel after separation positions have been determined;
Fig. 13 is a schematic diagram showing an output selection screen;
Figs. 14A and 14B is a schematic diagram showing how segments are moved when the original segment and the movement-destination segment are both separated segments;
Figs. 15A and 15B are schematic diagrams showing how segments are moved when the movement-destination segment is an unseparated segment;
Figs. 16A and 16B are schematic diagrams showing how segments are moved when the original segment is an unseparated segment;
Figs. 17A and 17B are schematic diagrams showing how segments are moved when the original segment and the movement-destination segment are both unseparated segments;
Fig. 18 is a flowchart showing a segment movement procedure;
Figs. 19A to 19D are schematic diagrams showing how a cross-fade operation is performed; and
Fig. 20 is a flowchart showing a cross-fade procedure.

### DETAILED DSECRIPTION OF THE EMBODIMENT

Preferred embodiments of this invention will be described with reference to the accompanying drawings:

### (1) Entire configuration of a personal computer

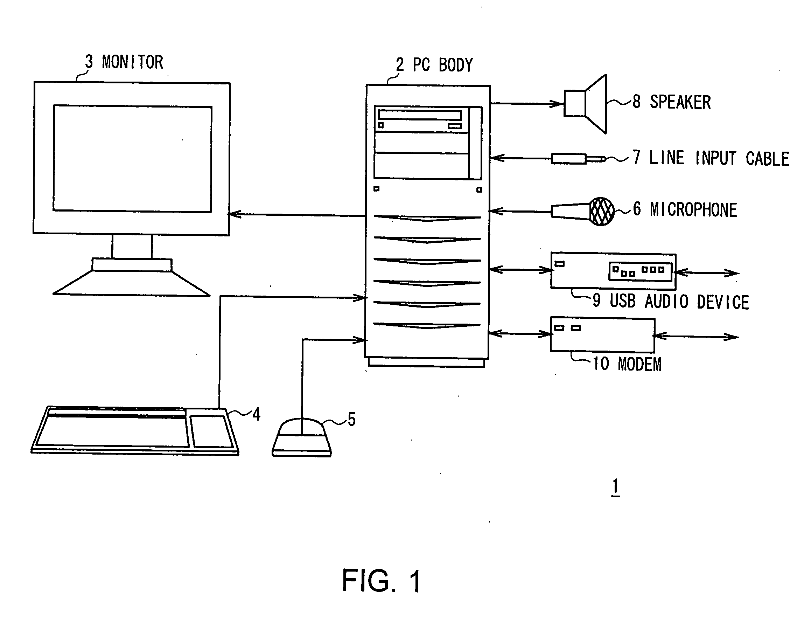

In Fig. 1, the numeral 1 denotes a personal computer as an information processing apparatus for editing data to which the present invention is applied. To a personal computer body (hereinafter referred to as a PC body) 2 for executing various information processings, there are connected a monitor 3, a keyboard 4 and a mouse 5.

To the PC body 2, there are connected a microphone 6, a line input cable 7 and a speaker 8. The PC body 2 digitally converts analog voice signals collected via the microphone 6 and analog voice signals inputted from external analog audio equipment such as a tape recorder via the line input cable 7 to generate (that is, record) voice data. The PC body 2 is adapted to, after performing various edit processings such as division and connection on the recorded voice data as required, based on a user operation, output (that is, record) the voice data as a voice data file to a recording medium such as an internal hard disk drive and a CD-RW disk inserted in a compact disk-rewritable (CD-RW) drive, and output the recorded voice data file via the speaker 8.

Furthermore, a universal serial bus (USB) audio device 9 which performs high-precision digital conversion is USB connected to the PC body 2. Thereby, it is possible to record a voice data file at a higher quality by digitally converting analog voice signals supplied from external analog audio equipment with the USB audio device 9 to input them into the PC body 2 and to restore the voice data file to analog voice signals at a higher quality by analog converting the recorded voice data file with the USB audio device 9.

In addition, a modem 10 is USB connected to the PC body 2 to enable data communication with information processors such as other personal computers and various servers on the Internet.

The circuit configuration of the PC body 2 will be now described in detail. In the PC body 2, a memory 12 as a work area for executing various programs, a video interface 13 for generating display signals for the monitor 3, and a peripheral component interconnect (PCI) bridge 14 are connected to a central processing unit (CPU) 11 which entirely controls the PC body 2 via a CPU bus 15.

To the PCI bridge 14, there are connected an integrated drive electronics (IDE) interface 16, an audio interface 17 and a USB interface 18 are connected via a PCI bus 15.

To the IDE interface 16, there are connected a hard disk drive 19 storing an operating system and various application programs such as a record edit management program to be executed by the CPU 11, and a CD-RW drive 20. The IDE interface 16 controls accesses to the hard disk drive 19 and the CD-RW drive 20.

The microphone 6, the line input cable 7 and the speaker 8 are connected to the audio interface 17. The audio interface 17 digitally converts analog voice signals inputted from the microphone 6 and the line input cable 7 to generate voice data and sends it to the PCI bus 15. The audio interface 17 also analog converts voice data supplied from the PCI bus 15 to generate analog voice signals and outputs it via the speaker 8.

The keyboard 4, the mouse 5, the USB audio device 9 and the modem 10 are connected to the USB interface 18. The USB interface 18 sends operation signals supplied from the keyboard 4 and the mouse 5 based on user operations to the PCI bus 15 and controls sending/receiving of digital voice data to and from the USB audio device 9 and sending/receiving of send/receive data to and from the modem 10.

In response to the PC body 2 being powered on, the CPU 11 reads the operating system from the hard disk drive 19, loading it on the memory 12 and execute it. The CPU 11 is adapted to realize various functions by reading various application programs from the hard disk drive 19 in response to operations of the keyboard 4 and the mouse 5 performed by a user and execute them while the operating system is running.

### (2) Record edit management program

As described above, in the personal computer 1, record edit processings, such as recording, division and connection of voice data and output of a voice data file to the hard disk drive 19 or a CD-RW disk, are executed by the CPU 11 reading and executing a record edit management program stored in the hard disk drive 19.

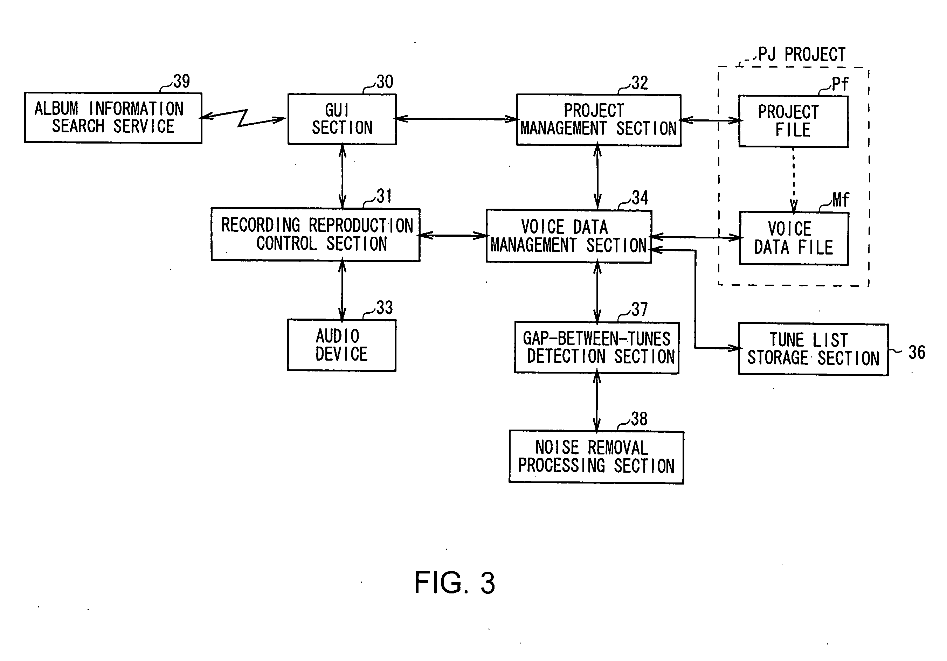

Fig. 3 shows the configuration of the record edit management program. A GUI section 30 displays various operation screens of the record edit management program on the monitor 3. It also generates operation instructions based on input operations from the keyboard 4 and the mouse 5 performed by the user, and sends them to a recording reproduction control section 31 and a project management section 32.

The recording reproduction control section 31 controls recording and reproduction of voice data in response to an operation instruction sent from the GUI section 30. That is, when a recording instruction is supplied from the GUI section 30 in response to an operation by the user, the recording reproduction control section 31 receives voice data supplied from an audio device 33 (the USB audio device 9, the audio interface 17 and a software module for accessing thereto) and sends it to a voice data management section 34.

The voice data management section 34 manages reading and writing of a voice data file Mf from and to the hard disk drive 19 and reading and writing of tune information from and to a tune list storage section 36. That is, the voice data management section 34 stores voice data supplied from the recording reproduction control section 31 in the hard disk drive 19 as a voice data file Mf. In this case, the voice data management section 34 copies the voice data and sends it to a gap-between-tunes detection section 37.

A noise removal processing section 38 acquires voice data from the gap-between-tunes detection section 37, performs a noise removal processing on the voice data to remove noises included in parts which should be silent and clear the silent parts, and then returns the voice data to the gap-between-tunes detection section 37. The gap-between-tunes detection section 37 automatically detects the gaps between tunes based on the silent parts of the voice data for which noises have been removed, and sends separation point information indicating the position of the gaps between tunes to the project management section 32.

The project management section 32 manages a project PJ, an aggregation of data to be handled by the record edit management program. The project PJ comprises a voice data file Mf, a project file PF in which various information on the voice data file Mf is stored, and tune information including the performance time and the title of each tune read from the tune list storage section 36.

The project management section 32 specifies the start time and the end time for each of the tunes (that is, tracks) separated at a separation point in the project file Pf, based on the separation point information supplied from the gap-between-tunes detection section 37.

Furthermore, the GUI section 30 sends the waveform of each track of the voice data file Mf recorded to the hard disk drive 19, to an information providing server which provides an album information search service 39 (such as MoodLogic® ) over the Internet, via the modem 10 (Fig. 1).

In this case, the information providing server retains in advance many pieces of album information each of which comprises the title and the number of tunes of an album, and the title, the performance time and the waveform of each track, and the like. The album information search service 39 searches the album information using the waveform sent from the GUI section 30, and returns the title and the performance time of a track corresponding to the waveform to the GUI section 31.

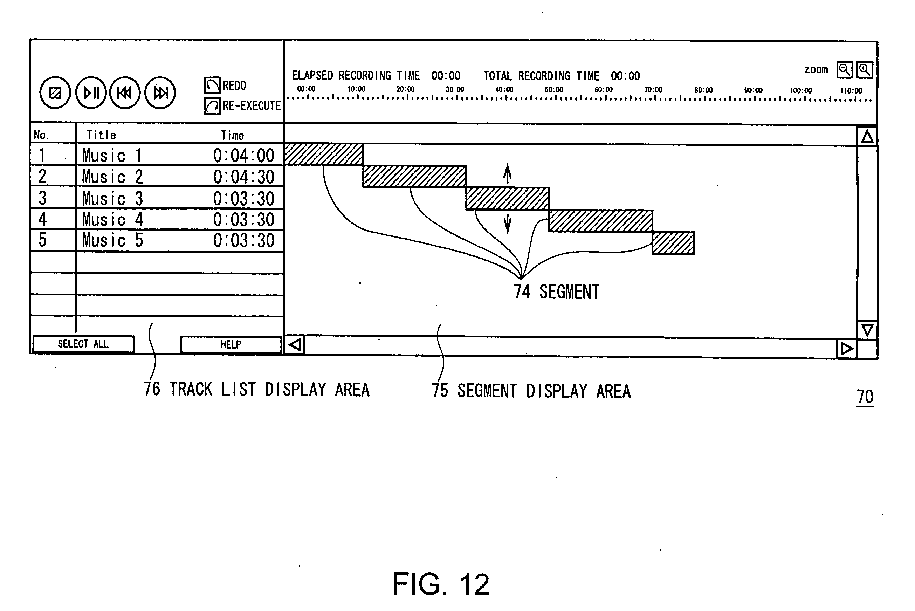

The GUI section 31 specifies the title and the performance time of the track returned from the album information search service 39 based on the sent waveform, in an appropriate part of the project file Pf and displays the title and the performance time of the track on a track list display area 76 (Fig. 12) of a record edit screen 60 to be described later.

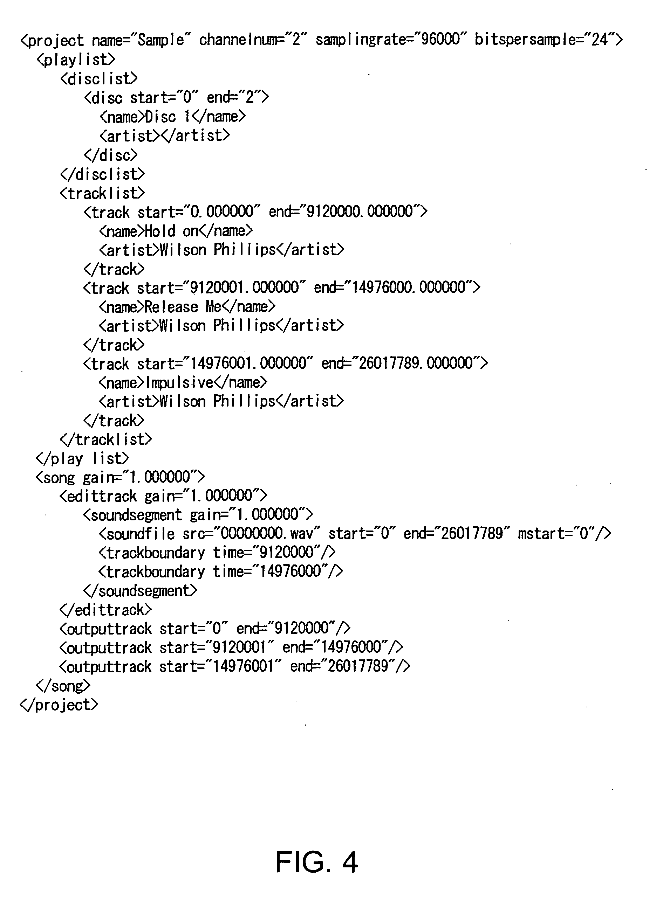

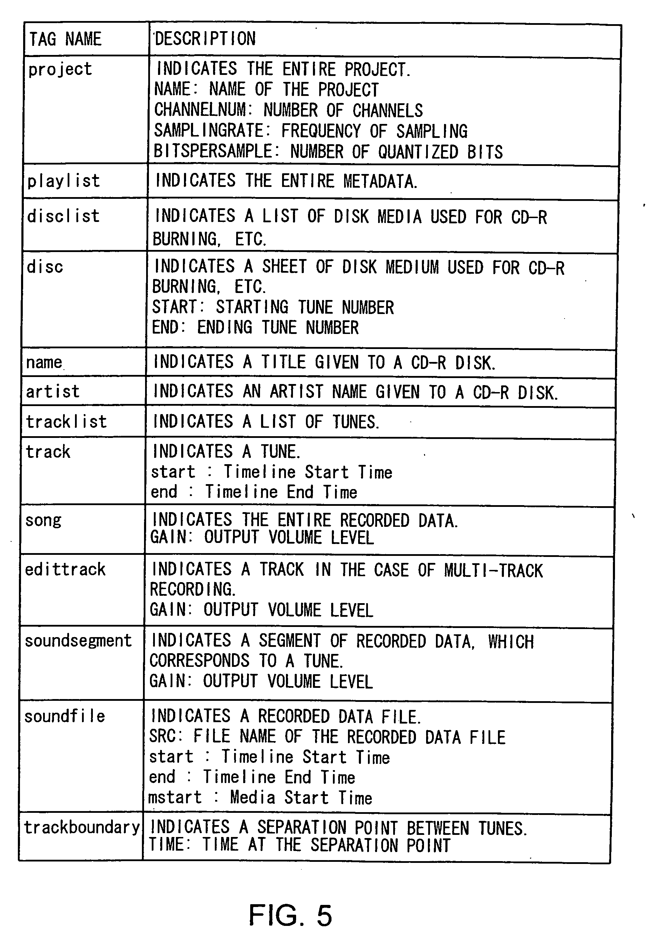

Fig. 4 shows a description example of a project file Pf. The project file Pf is written in the extensible markup language (XML), and the start time and the end time ("track start" and "end") of each track, the title and the name of the artist ("name" and "artist"), the file name of the reference source voice data file Mf ("soundfile src") of the project file Pf and the like are specified therein. Fig. 5 shows examples of tags used for such project files Pf.

In response to a reproduction instruction which has been supplied from the GUI section 30 in response to an operation by the user, the recording reproduction control section 31 controls the voice data management section 34 to read a voice data file Mf and outputs it to the audio device 33.

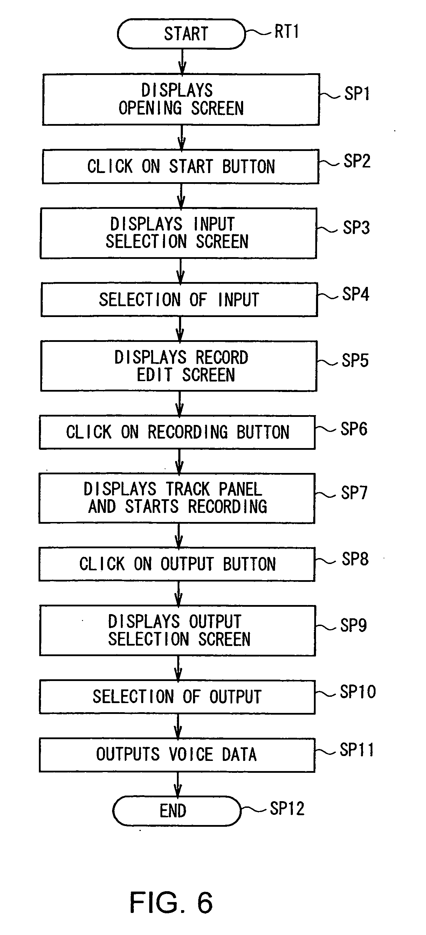

Description will be now made on a sequence of processings from activation of the record edit management program described above to recording, editing and output to a recording medium of voice data using the flowchart shown in Fig. 6.

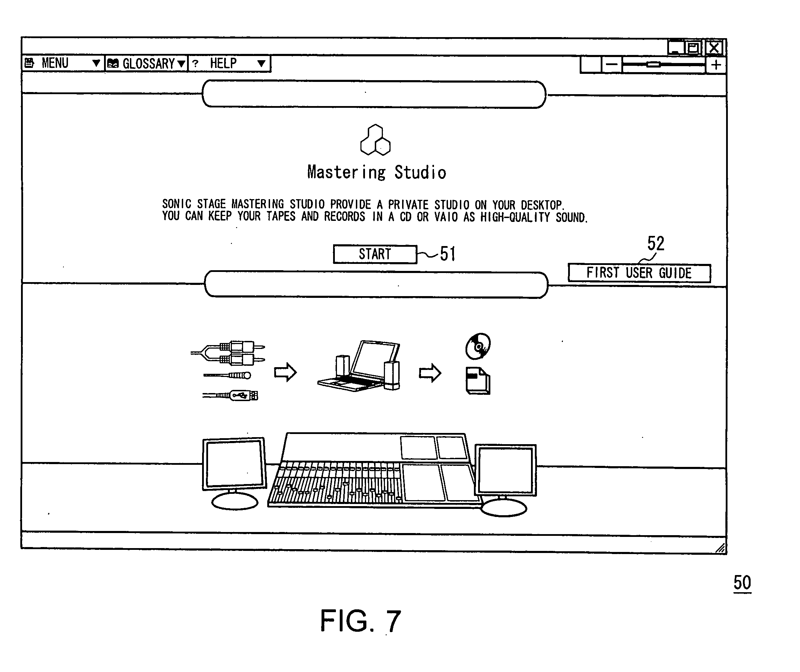

The CPU 11 of the personal computer 1 starts a record edit management procedure RT1 at a start step and proceeds to step SP1 to display an opening screen 50 shown in Fig. 7 on the monitor 3.

There are displayed a start button 51 for staring the sequence of processings of the record edit management program at the center of the opening screen 50, and a user guide button 52 for displaying an online user guide on the right side of the start button 51. At the next step SP2, the CPU 11 waits for a click on start button 51 to be performed by a user, and proceeds to the next step SP3 if confirming that start button 51 has been clicked.

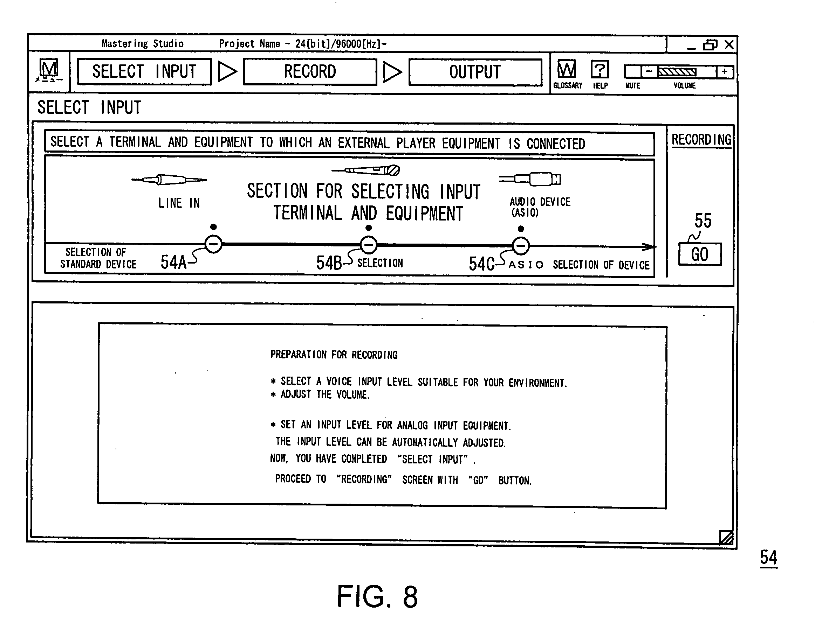

At step SP3, the CPU 11 displays an input selection screen 54 shown in Fig. 8 on the monitor 3. At the center of the input selection screen 54, there are displayed three input selection buttons 54, that is, a line input selection button 54A for selecting the line input cable 7 as an input terminal for analog voice signals, a microphone input selection button 54B for selecting the microphone 6 as input equipment for analog voice signals, and a USB audio device selection button 54C for selecting the USB audio device 9 as input equipment, and there is displayed a "GO" button 55 for determining the selected input terminal or equipment on the right of the three input selection buttons.

At the next step SP4, the CPU 11 waits for an input selection operation to be performed by the user, and proceeds to the next step SP5 if confirming that the "GO" button 55 has been clicked after selection of any of the input selection buttons 54A to 54C.

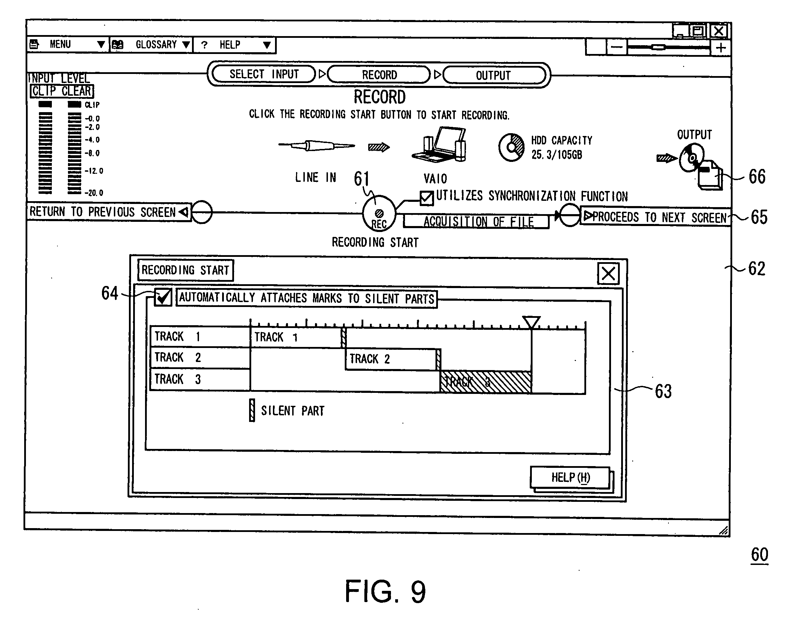

At step SP5, the CPU 11 displays the record edit screen 60 shown in Fig. 9 on the monitor 3. On this record edit screen 60, the user can perform various record edit operations.

At the center of the record edit screen 60, there is displayed a recording start button 61 for starting recording from the input terminal or equipment selected at the input selection screen 54. In a panel area 62 occupying the lower half of the record edit screen 60, there is displayed an automatic marking setting panel 63 for selecting "enabled" (that is, "to be executed") or "disabled" (that is, "not to be executed") for an automatic marking function for attaching a separation point marks (described later) at the gaps between tunes based on the result of automatic detection of gaps between tunes. By checking an automatic marking check box 64, the automatic marking function is enabled.

At step SP6, the CPU 11 waits for an click on the recording start button 61 to be performed by the user, and proceeds to the next step SP7 if confirming that the recording start button 61 has been clicked.

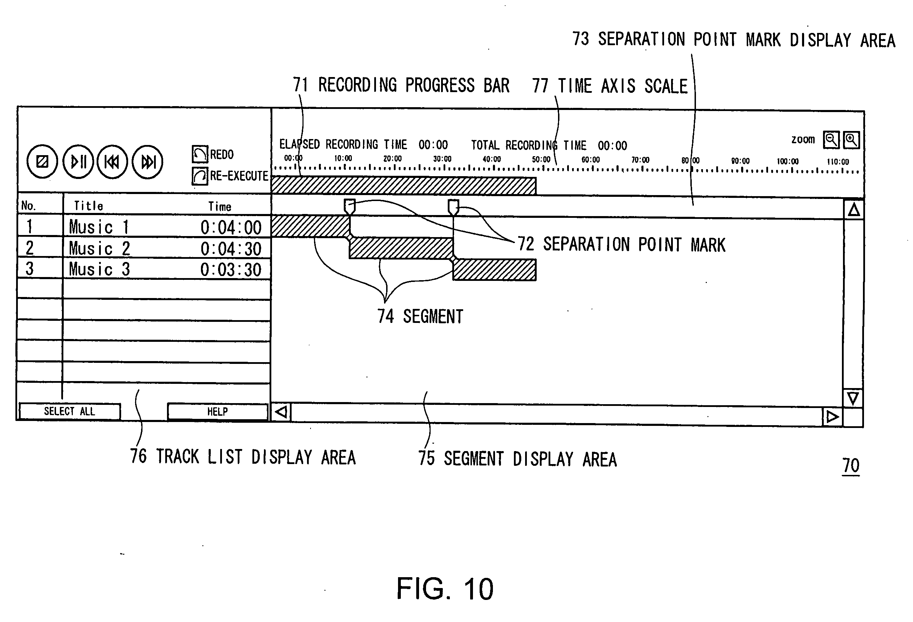

At step SP7, the CPU 11 as separation point segment displaying means deletes the automatic marking setting panel 63 and, instead, displays a track panel 70 as shown in Fig. 10 in the panel area 62 of the record edit screen 60, and then starts recording.

At the upper part of the track panel 70, there is displayed a bar-shaped recording progress bar 71 which extends towards the right from the start to the end of recording, corresponding to the lapse of recording time. This recording progress bar 71 is shown in red during recording and in light blue after recording.

Below the recording progress bar 71, there is provided a separation point mark display area 73 for displaying separation point marks 72 for separating recorded voice data onto multiple tracks. The separation point marks 72 are automatically attached to silent parts between tunes by the record edit management program if the automatic marking function is enabled. The separation point marks 72 can be manually attached by the user after recording.

Below the separation point mark display area 73, there is provided a segment display area 75 for displaying segments 74 as track segments for visually indicating the performance time and the place in the order of respective tracks. On the left side of the segment display area 75, there is provided a track list display area 76 for displaying the track number, the title and the performance time of each track in characters.

In the track list display area 76, the title of a track which the GUI section 30 (Fig. 3) has acquired from the album information search service 39 is automatically displayed on the same rank as a segment 74 corresponding to the track. It is also possible to manually edit the title of a track in the track list display area 76.

Below the recording progress bar 71, there is provided a time axis scale 77 indicating the time axis of the recording progress bar 71, the separation point mark display area 73 and the segment display area 75 as a scale, and at the upper right of the time axis scale 77, there are provided a time scale zoom-in button 78A and a time scale zoom-out button 78B for zooming the time scale of the time axis scale 77.

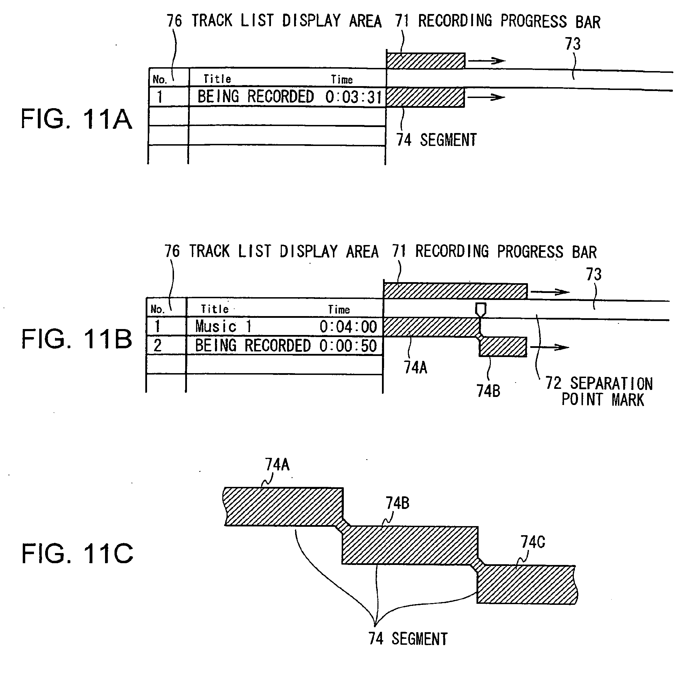

As shown in Fig. 11A, the segment 74 extends towards the right in synchronization with the recording progress bar 71 during recording.

In the case where the automatic marking function is enabled, if a separation point mark 72 is automatically attached to a silent part and the track is separated as shown in Fig. 11B, then extension of a segment 74A indicating the first track stops at the position of the separation point mark 72, and a segment 74B indicating the next track starting from the separation point mark 72 is displayed one rank below the segment 74A. This new segment 74B also extends towards the right in synchronization of the recording progress bar 71.

As described above, if the automatic making function is enabled, the segments 74A, 74B, ... indicating respective tracks automatically separated are sequentially displayed in a staircase pattern in the segment display area 75 as the recording progresses. If the automatic making function is disabled, the segment 74 extends in synchronization with the recording progress bar 71 without being separated.

During the recording state, there is displayed a recording end button (not shown) instead of the recording start button 61 on the record edit screen 60 (Fig. 9). The CPU 11 stops recording if confirming that the recording end button has been clicked.

During the recording stop state, the user can perform edit processings such as changing the separation position of tracks by moving a separation point mark 72 on the track panel 70 (Fig. 10), reseparating a track by adding a new separation point mark 72 and connecting consecutive two tracks by deleting a separation point mark 72.

When separation point marks 72 are displayed on the track panel 70, the separation position between tracks has not been determined yet, and the corners of each segment 74 are displayed as connected to its previous and following segments 74 as shown in Fig. 11C. Such segment in this condition is referred to as an unseparated segment.

On confirming that a "GO" button 65 (Fig. 9) of the record edit screen 60 has been clocked, the CPU 11 then determines the separation positions between tracks. That is, as shown in Fig. 12, the segments 74 for which separation has been completed are displayed on the track panel 70 in a condition that each of them is not connected to the preceding and following segments 74. The recording progress bar 71 and separation point marks 72 are deleted.

When separation point marks 72 are displayed (Fig. 10), it is also possible to determine each separation position individually by right-clicking a separation point mark 72 to display a popup menu (not shown) and selecting a "separate" from the popup menu. In this case, segments for which separation has been completed and unseparated segments are displayed in a mixed condition on the track panel 70.

In this condition, the user can change the order of the tracks by moving each of the segments 74 upward or downward (arrow direction). That is, if a segment 74 is moved one rank upward, then the track indicated by the segment 74 is moved one rank forward in the order. If a segment 74 is moved one rank downward, then the track indicated by the segment 74 is moved one rank backward in the order.

After the order of the tracks are changed as described above, if confirming that an output button 66 (Fig. 9) of the record edit screen 60 has been clicked (step SP8 of Fig. 6), the CPU 11 determines the editing result and proceeds to the next step SP9.

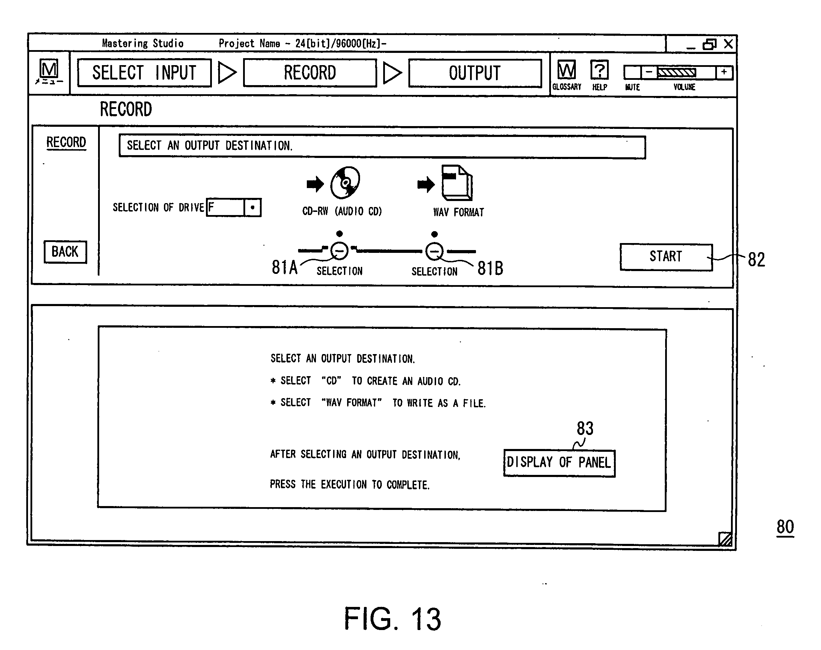

At step SP9, the CPU 11 displays an output selection screen 80 shown in Fig. 13 on the monitor 3. At the center of the output selection screen 80, there are displayed two output destination selection buttons 81, that is, a CD-RW drive selection button 81A for selecting the CD-RW drive 20 as the destination for outputting edited tracks and a hard disk drive selection button 81B for selecting the hard disk drive 19 as the destination for outputting the tracks. On the right side of the two buttons, there is displayed a start button 82 for determining a selected output destination to start output.

At the next step SP10, the CPU 11 waits for an output destination selection operation to be performed by the user. After either the output destination selection buttons 82A or 82B is selected, the CPU 11 proceeds to the next step SP11 if confirming that the start button 82 has been clicked.

At step SP11, the CPU 11 outputs a voice data file Mf corresponding to tracks to the selected output destination, and ends the record edit management process at the next step SP12.

The CPU 11 is adapted to convert a voice data file Mf into a file in a WAVE format, which is a data format for the Windows® standard audio recording/reproduction functions to output it, if the hard disk drive 19 is selected as the destination for outputting tracks, and converts the voice data file Mf into a data format for recording to a CD-R or a CD-RW to output it, if the CD-RW drive 20 is selected as the destination for outputting tracks.

### (3) Detailed description of record edit screen

As described above, on the track panel 70 (Fig. 10) of the record edit screen 60, there are displayed segments 74 as track segments for visually indicating the performance time and the place in the order of respective separated tracks in the segment display area 75.

In the segment display area 75, the horizontal axis direction as a second coordinate axis corresponds to the time axis of voice data, and it is defined that the time increases from the left side to the right side of the segment display area 75. The left edge of each segment 74 is displayed at the position that corresponds to the start time of a corresponding track, and the right edge is displayed at the position that corresponds to the end time of the corresponding track. Accordingly, the length of each segment 74 indicates the performance time of the track corresponding to the segment 74.

In the segment display area 75, the vertical axis direction as a first coordinate axis corresponds to the track numbers of segments 74, and it is defined that the track number increases from the upside to the downside of the segment display area 75.

Accordingly, in the segment display area 75, the segment 74 for the track number 1 is always displayed at the left top of the segment display area 75, and the segments 74 of track numbers 2, 3, ... are sequentially displayed in a staircase pattern down to the left. Thereby, on the track panel 70, the user can be intuitively notified of the order of the tracks through the vertical and horizontal relationships among the segments 74 displayed in the segment display area 75.

Furthermore, in the segment display area 75, segments for which separation has been determined (hereinafter referred to as separated segments) and unseparated segments are displayed in a mixed condition. In the segment display area 75, the separated segments and the unseparated segments are displayed in different colors (for example, the separated segments in green, and unseparated segments in blue), so that the user can be intuitively notified of the separated/unseparated condition of the segments.

Furthermore, in the segment display area 75, segments with a time length equal to and below a predetermined time length (for example, one second) are displayed in a color (for example, in red) different from the color of the other segments, so that the presence of excessively short tracks is emphasized to notify the user.

Furthermore, in the segment display area 75, it is possible to specify, on a popup menu (not shown) displayed by right-clicking each segment 74, execution of various voice processing, such as a normalization processing for individually adjusting the volume of tracks and a noise removal processing, for the track to which the segment 74 corresponds. In the segment display area 75, the segment corresponding to the track for which such voice processing has been performed is displayed in a color different from the color of the other segments, so that the presence of the tracks for which various voice processings have been performed is emphasized to the user.

Furthermore, in the segment display area 75 of the track panel 70, by vertically drug-and-dropping a segment 74, the place in the order of the track corresponding to the segment 74 can be changed.

In this case, in the track panel 70, separated segments and unseparated segments are displayed in a mixed condition as described above. When the original segment and the movement-destination segment are both separated segments, the original and movement-destination segments move independently from each other. By contrast, when the original segment or the movement-destination segment is an unseparated segment, the unseparated segment moves together with its previous and following unseparated segments as an integrated group.

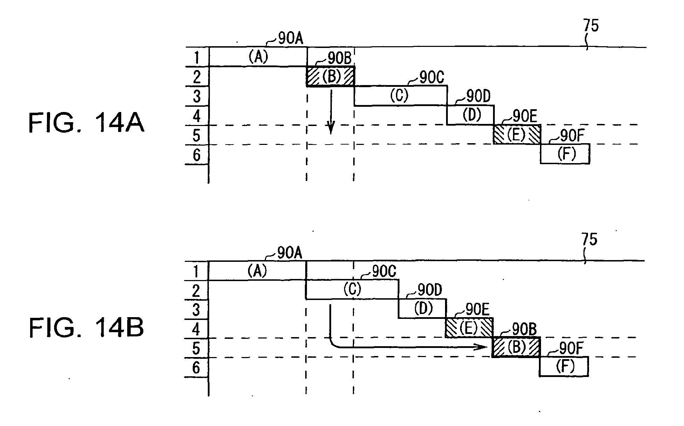

First, description will be made on how segments are moved in the case where the original and movement-destination segments are both separated segments, using Figs. 14A and 14B.

In Fig. 14A, there are displayed six separated segments 90A to 90F in that order the segment display area 75 of the track panel 70. Suppose that, in this condition, the segment 90B disposed for the second track is drug-and-dropped to the fifth track for which the separated segment 90E is disposed.

In this case, since the original segment (separated segment 90B) and the movement-destination segment (separated segment 90E) are both separated segments, the original and movement-destination segments move independently from each other. That is, as shown in Fig. 14B, the original separated segment 90B moves to a track next to (that is, to the lower right of) the movement-destination separated segment 90E, and the separated segments 90C, 90D, 90E and 90B move forward (that is, to the upper left).

In this way, the original separated segment 90B moves to the fifth track which is the drug-and-drop destination.

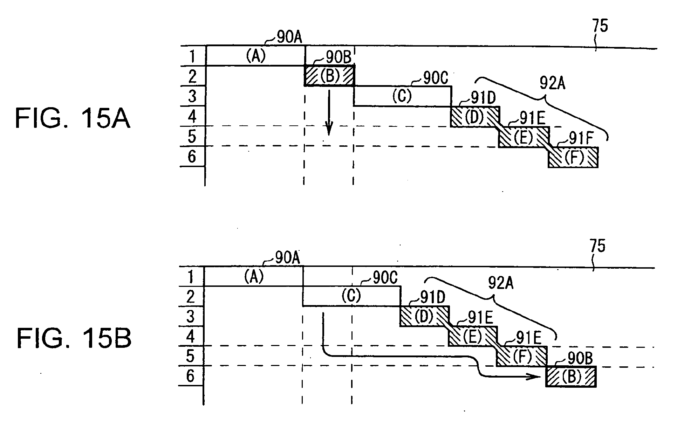

Next, description will be made on how segments are moved in the case where the original segment is a separated segment and the movement-destination segment is an unseparated segment, using Figs. 15A and 15B.

In Fig. 15A, in the segment display area 75 of the track panel 70, separated segments 90A, 90B and 90C, and unseparated segments 91D, 91E and 91F are displayed in that order. Suppose that, in this condition, the segment 90B disposed for the second track is drug-and-dropped to the fifth track for which the unseparated segment 91E is disposed.

In this case, the movement-destination unseparated segment 91E moves together with its preceding and following unseparated segments 91D and 91F as an integrated unseparated segment group 92A. That is, as shown in Fig. 15B, the original separated segment 90B moves to a track next to the unseparated segment group 92A including the movement-destination unseparated segment 91E (that is, to the lower right of the unseparated segment 91F, which is the last segment of the unseparated segment group 92A), and the separated segment 90C, the unseparated segment group 92A and the separated segment 90B move forward.

In this way, the original separated segment 90B moves to the sixth track, a track after the fifth track where it has been drug-and-dropped.

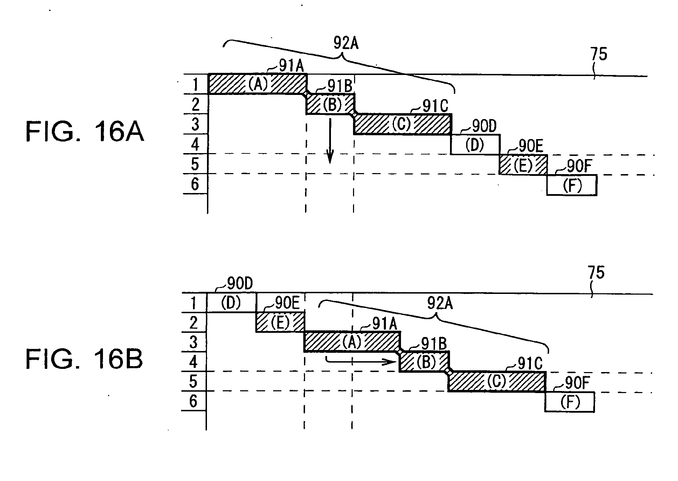

Next, description will be made on how segments are moved in the case where the original segment is an unseparated segment and the movement-destination segment is a separated segment, using Figs. 16A and 16B.

In Fig. 16A, in the segment display area 75 of the track panel 70, unseparated segments 91A, 91B and 91C, and separated segments 90D, 90E and 90F are displayed in that order. Suppose that, in this condition, the unseparated segment 91B arrange for the second track is drug-and-dropped to the fifth track for which the separated segment 90E is arranged.

In this case, the original unseparated segment 91B moves together with its preceding and following unseparated segments 91A and 91C as an integrated unseparated segment group 92A. That is, as shown in Fig. 16B, the unseparated segment group 92A including the original unseparated segment 91B moves to a track next to the movement-destination separated segment 90E, and the separated segments 90D and 90E, and the unseparated segment group 92A move forward. In this way, the original separated segment 90B moves to the fourth track, a track before the fifth track to which it has been drug-and-dropped.

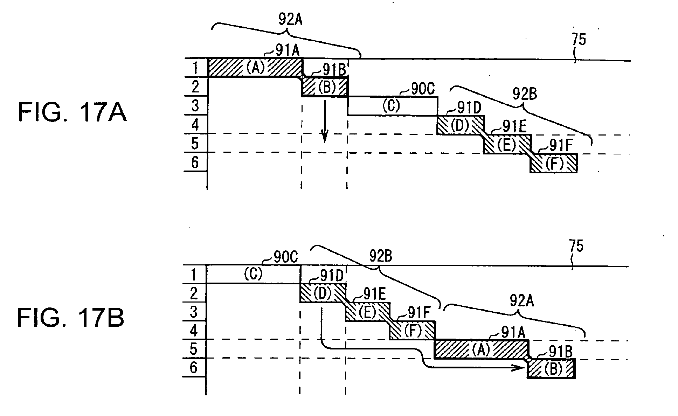

Furthermore, description will be made on how segments are moved in the case where the original and movement-destination segments are both unseparated segments, using Figs. 17A and 17B.

In Fig. 17A, in the segment display area 75 of the track panel 70, unseparated segments 91A and 91B, separated segment 90C and the unseparated segments 91D, 91E and 90F are displayed in that order. Suppose that, in this condition, the unseparated segment 91B arranged for the second track is drug-and-dropped to the fifth track for which the unseparated segment 91E is arranged.

In this case, the original unseparated segment 91B moves together with its preceding unseparated segment 91A as an integrated unseparated segment group 92A, and the movement-destination unseparated segment 91E moves together with its preceding and following unseparated segments 91D and 91F as an integrated unseparated segment group 92B.

That is, as shown in Fig. 17B, the unseparated segment group 92A including the original unseparated segment 91B moves to a track next to the unseparated segment group 92B including the movement-destination unseparated segment 91E (that is, to the lower right of the unseparated segment 91F, which is the last segment of the unseparated segment group 92B), and the separated segment 91C, the unseparated segment groups 92B and 92A move forward.

In this way, the original separated segment 90B moves to the sixth track, a track after the fifth track where it has been drug-and-dropped.

In this way, in the track panel 70, consecutive unseparated segments are moved as an integrated unseparated segment group, so that the order of tracks can be changed while keeping continuity among unseparated segments.

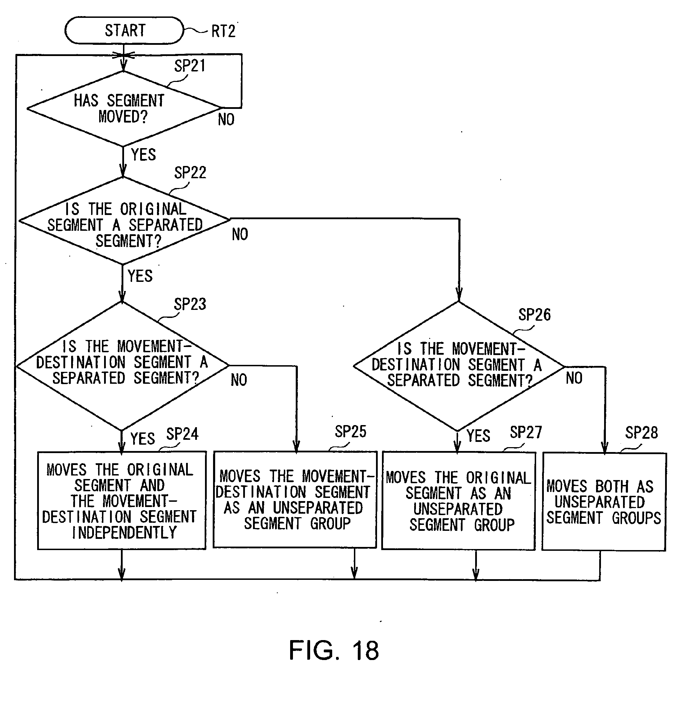

Next, description will be made on a segment movement display procedure on the track panel 70 described above, using the flowchart shown in Fig. 18. The CPU 11 of the personal computer 1 as display area displaying means and track segment displaying means starts a segment movement display procedure RT2 at a start step and proceeds to step SP21.

At step SP21, the CPU 11 waits for an drug-and-drop operation to be performed on a segment displayed in the track panel 70, and proceeds to the next step SP22 if detecting a segment being drug-and-dropped by a user.

At step SP22, the CPU 11 determines whether or not the drug-and-dropped original segment is a separated segment. If a positive result is obtained at SP22, this means that the original segment is a separated segment, and the CPU 11 proceeds to step SP23.

At step SP23, the CPU 11 determines whether or not the movement-destination segment to which the drug-and-dropped segment has moved is a separated segment. If a positive result is obtained at step SP23, this means that the original and movement-destination segments are both separated segments. The CPU 11 then proceeds to step SP24 to display that the original and movement-destination segments have moved independently from each other, and returns to step SP21.

On the contrary, if a negative result is obtained at step SP23, this means that the original segment is a separated segment but the movement-destination segment is an unseparated segment. The CPU 11 then proceeds to step SP25 to display that an unseparated segment group including the movement-destination segment has moved as an integrated group, and returns to step SP21.

On the contrary, if a negative result is obtained at step SP22, this means that the original segment is an unseparated segment, and the CPU 11 proceeds to step SP26.

At step SP26, the CPU 11 determines whether or not the drug-and-dropped original segment is a separated segment. If a positive result is obtained at step SP26, this means that the original segment is an unseparated segment but the movement-destination segment is a separated segment. The CPU 11 then proceeds to step SP27 to display that an unseparated segment group including the original segment has moved as an integrated group, and returns to step SP21.

On the contrary, if a negative result is obtained at step SP26, this means that the original and movement-destination segments are both unseparated segments. The CPU 11 then proceeds to step SP28 to display that each of an unseparated segment group including the original segment and an unseparated segment group including the movement-destination segment have moved as an integrated group, and returns to step SP21.

The CPU 11 continuously executes the above-mentioned processing while the track panel 70 is displayed.

In addition to the configuration described above, the track panel 70 enables setting and releasing of cross-fade between two continuous tracks by drug-and-dropping the fore end of a segment.

The cross-fade is a processing for gradually switching voice of the former and latter tracks while mixing them by performing fade-out on the ending part of the former track for a predetermined fade period Tf while performing fade-in on the starting part of the latter track for the predetermined fade period Tf, and then overlapping the fade-out part of the former track and the fade-in part of the latter track.

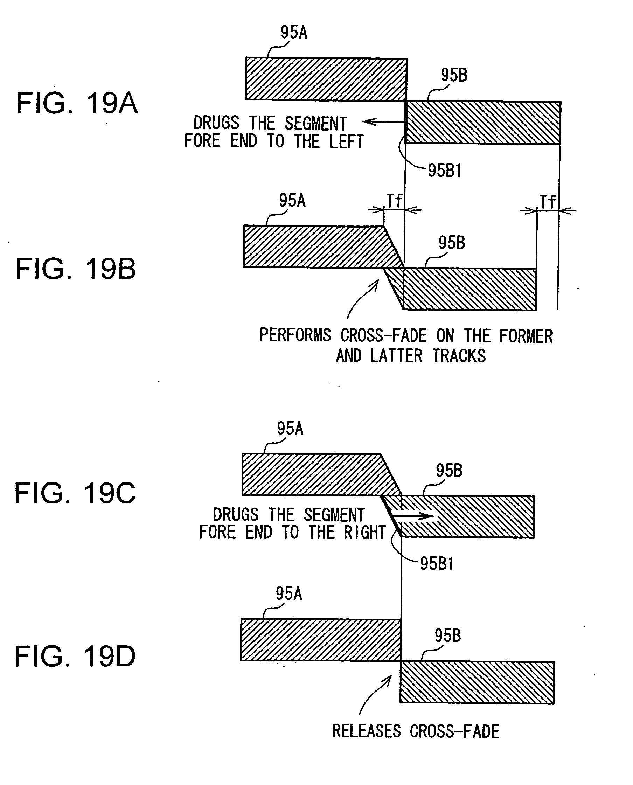

That is, as shown in Fig. 19A, in a condition where there are two segments 95A and 95B indicating two consecutive tracks, by drug-and-dropping the segment fore end 95B1 of the latter segment 95B towards the left (that is, towards the direction in which it is overlapped with the former segment), the CPU 11 performs the above-mentioned cross-fade on the two tracks corresponding to the two segments 95A and 95B.

As shown in Fig. 19B, the CPU 11 then moves the entire latter segment 95B forward by the fade period Tf to be overlapped with the former segment 95A, and displays the rear end of the former segment 95A and the fore end of the latter segment 95A with a slope to visually notify the user of the cross-fade provided between the segments 95A and 95B.

As shown in Fig. 19C, in the case where cross-fade is set between two consecutive tracks, by drug-and-dropping the segment fore end 95B1 of the latter segment 95B towards the right (that is, towards the direction in which it is separated from the former segment), the CPU 11 releases the cross-fade provided on the two tracks corresponding to the two segments 95A and 95B.

As show in Fig. 19D, the CPU 11 then moves the entire latter segment 95B backward by the fade period Tf, and displays the rear end of the former segment 95A and the fore end of the latter segment 95A with their slopes restored to vertical lines to visually notify the user to the effect that the cross-fade provided between the segments 95A and 95B has been released.

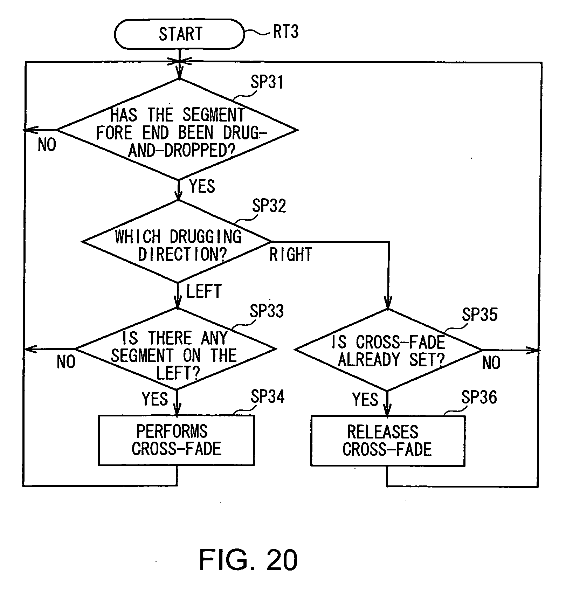

Detailed description will be now made on a cross-fade procedure on the track panel 70 described above, using the flowchart shown in Fig. 20. The CPU 11 of the personal computer 1 starts a cross-fade procedure RT3 at a start step and proceeds to step SP31.

At step SP31, the CPU 11 waits for a drug-and-drop operation to be performed on the fore end of a segment displayed in the track panel 70, and proceeds to the next step SP32 if detecting a drug-and-drop operation has been performed on the fore end of a segment by a user.

At step SP32, the CPU 11 determines the operation direction of the drug-and-drop operation. If the operation direction of the drug-and-drop operation is determined to be the left direction at step SP32, the CPU 11 proceeds to step SP33.

At step SP33, the CPU 11 determines whether or not there is any other segment in the left direction of the drug-and-dropped segment, that is, in the previous track. If a positive result is obtained at step SP33, this means that the drug-and-drop operation is an operation to set cross-fade. The CPU 11 then proceeds to step SP34 to perform cross-fade on the two consecutive tracks, and returns to step SP31.

On the contrary, if a negative result is obtained at step SP33, the CPU 11 returns to step SP31 without performing cross-fade.

If the operation direction of the drug-and-drop operation is determined to be the right direction at step SP32, the CPU 11 proceeds to step SP35.

At step SP35, the CPU 11 determines whether or not cross-fade is set for the drug-and-dropped segment. If cross-fade is set for the segment at step SP35, this means that the drug-and-drop operation is an operation to release the cross-fade. The CPU 11 then proceeds to step SP36 to release the cross-fade provided on the two consecutive tracks, and returns to step SP31.

On the contrary, if a negative result is obtained at step SP35, the CPU 11 returns to step SP31 without executing release of the cross-fade.

The CPU 11 continuously executes the above-mentioned processing while the track panel 70 is displayed.

### (4) Operation and effects

In the above configuration, the personal computer 1 displays segments 74 corresponding to respective tracks, obtained as a result of automatically or manually separating voice data, in the segment display area 75 on the track panel 70 on the record edit screen 60.

The personal computer 1 defines the horizontal axis of the segment display area 75 as a time axis on which time increases from the left side towards the right side and defines that, on the vertical axis of the segment display area 75, the track number increases from the upside to the downside. The personal computer 1 displays the segments for respective tracks in accordance with these two display definitions. Accordingly, the personal computer 1 displays segments with a horizontal length corresponding to the performance time of the corresponding track, in the order of track numbers and in a staircase pattern down to the left.

Accordingly, it is possible for the personal computer 1 to intuitively notify a user of the place in the order and the performance time of each track through the position relationship among segments and the length of the segments.

In addition, it is possible for the personal computer 1 to intuitively notify the user of the separation/unseparation condition of segments by displaying separated segments for which separation has been determined and unseparated segments for which separation has not been determined in different display colors and to intuitively notify the user of the continuity relationship among unseparated segments by displaying unseparated segments with their corners connected with other unseparated segments.

Furthermore, it is possible for the personal computer 1 to, by displaying segments corresponding to such tracks on which various voice processings have been performed, such as normalization and noise removal, or segments corresponding to excessively short tracks in a different color, intuitively notify the user of the presence of these tracks through the display color.

In addition, it is possible for the personal computer 1 to enable the user to easily change the order of tracks with an intuitive operation by moving a segment based on a vertical drug-and-drop operation performed on the segment to change the order of tracks.

In this case, if the original segment or the movement-destination segment is an unseparated segment, then, by moving the unseparated segment and its preceding and following segments as an integrated unseparated segment group, the personal computer 1 can change the order of tracks while keeping the continuity among the unseparated segments.

In addition, since the personal computer 1 sets and releases cross-fade between two continuous tracks based on a left-direction or right-direction drug-and-drop operation performed on the fore end of a segment, the user can easily set and release cross-fade with an intuitive operation.

### (5) Other embodiments

In the embodiment described above, description has been made on the case where the present invention is applied to a record edit management program for editing voice data. However, the present invention is not limited thereto and can also be applied to a picture edit management program for editing picture data.

In the embodiment described above, the horizontal axis direction of the segment display area corresponds to the time axis of voice data, and the vertical axis perpendicular thereto corresponds to the track numbers. However, the present invention is not limited thereto, and it is also possible that the vertical direction of the segment display area corresponds to the time axis of voice data, and the horizontal direction to the track numbers.

Furthermore, in the embodiment described above, the segment movement display procedure and the cross-fade procedure described above are performed by the CPU 11 of the personal computer 1 reading and executing a record edit management program prestored in the hard disk drive 19. However, the present invention is not limited thereto, and these procedures may be performed by installing a program storage medium storing the record edit management program into the PC body 2.

As described above, according to the present invention, a track segment is displayed at a position corresponding to a track number on a first coordinate axis of a track segment display area, with a range corresponding to the period from the start time to the end time of the track on a second coordinate axis, and thereby, it is possible to intuitively notify a user of the place in the order and the performance time of each track through the position relationship among track segments and the length of thereof.

In response to an operation of moving a track segment along the first coordinate axis, the track number of the track corresponding to the track segment is changed and the order of tracks is also changed. Furthermore, the track segment is displayed as having moved to the position corresponding to the changed track number and the changed place in the order. Thereby, it is possible for the user to easily change the order of tracks with an intuitive operation.

While there has been described in connection with the preferred embodiments of the invention, it will be obvious to those skilled in the art that various changes and modifications may be aimed, therefore, to cover in the appended claims all such changes and modifications as fall within the true spirit and scope of the invention.

## Claims

1. An information processing apparatus for editing data for dividing data to be edited onto multiple tracks, said information processing apparatus comprising:
display area displaying means for displaying a track segment display area consisting of an area for displaying track segments indicating the tracks, in which a first coordinate axis corresponds to the track numbers of the tracks and a second coordinate axis vertical to the first coordinate axis corresponds to the time axis of the data; and
track segment displaying means for displaying a track segment corresponding to a track at a position corresponding to the track number of the track on the first coordinate axis in the track segment display area, with a range corresponding to the period from the start time to the end time of the track on the second coordinate axis.

2. The information processing apparatus according to claim 1, wherein,
in response to an operation to move the track segment along the first coordinate axis, the track segment displaying means changes the track number of the track corresponding to the track segment, changes the place of the track in the order, and in addition, displays the track segment as having moved to the position corresponding to the changed track number and the changed place in the order.

3. The information processing according to claim 1, wherein
the track segment displaying means displays the track segments in different colors depending on processings performed on the respective tracks corresponding to the track segments.

4. The information processing apparatus according to claim 1, wherein, in response to an operation to move the fore end of the track segment along the second coordinate axis, the track segment displaying means performs or releases cross-fade on or from the track corresponding to the track segment and the immediately previous track.

5. An information processing method for editing data for dividing data to be edited onto multiple tracks, said information processing method comprising:
a display area displaying step of displaying a track segment display area consisting of an area for displaying track segments indicating the tracks, in which a first coordinate axis corresponds to the track numbers of the tracks and a second coordinate axis vertical to the first coordinate axis corresponds to the time axis of the data; and
a track segment displaying step of displaying a track segment corresponding to a track at a position corresponding to the track number of the track on the first coordinate axis in the track segment display area, with a range corresponding to the period from the start time to the end time of the track on the second coordinate axis.

6. The information processing method according to claim 5, wherein,
a step of, in response to an operation to move the track segment along the first coordinate axis, changing the track number of the track corresponding to the track segment, changing the place of the track in the order, and in addition, displaying the track segment as having moved to the position corresponding to the changed track number and the changed place in the order.

7. The information processing method according to claim 5, wherein
the track segment displaying step displays the track segments in different colors depending on processings performed on the respective tracks corresponding to the track segments.

8. The information processing method according to claim 5, wherein
a cross-fade processing step of, in response to an operation to move the fore end of the track segment along the second coordinate axis, performing or releasing cross-fade on or from the track corresponding to the track segment and the immediately previous track.

9. An information processing program to edit data for dividing data to be edited onto multiple tracks, said information processing program causing a computer to execute:
a display area displaying step of displaying a track segment display area consisting of an area for displaying track segments indicating the tracks, in which a first coordinate axis corresponds to the track numbers of the tracks and a second coordinate axis vertical to the first coordinate axis corresponds to the time axis of the data; and
a track segment displaying step of displaying a track segment corresponding to a track at a position corresponding to the track number of the track on the first coordinate axis in the track segment display area, with a range corresponding to the period from the start time to the end time of the track on the second coordinate axis.
